# EUROPÄISCHE PATENTSCHRIFT

(11) **EP 0 403 908 B1**
(45) Veröffentlichungstag und Bekanntmachung des Hinweises auf die Patenterteilung: **01.03.1995**
(21) Anmeldenummer: 90110988.4
(22) Anmeldetag: 11.06.1990
(51) Int. Cl.: G01B 11/24

(54) **Verfahren und Einrichtung zum Messen der Konturen eines Körpers**
Procedure and device to measure the contours of an object
Procédé et dispositif pour mesurer les contours d'un objet

(30) Priorität: 19.06.1989 DE 3919865; 11.09.1989 DE 3930224; 21.12.1989 DE 3942257
(43) Veröffentlichungstag der Anmeldung: 27.12.1990
(73) Patentinhaber: HARTMETALLWERKZEUGFABRIK ANDREAS MAIER GMBH, D-88477 Schwendi (DE)
(72) Erfinder: Maier, Andreas, D-7959 Schwendi-Hörenhausen (DE)
(74) Vertreter: König, Beate, Dipl.-Phys. Dr.

(56) Entgegenhaltungen:
- EP-A- 0 280 903
- FR-A- 2 615 343
- GB-A- 2 102 574
- US-A- 3 737 856
- US-A- 4 657 395
- PATENT ABSTRACTS OF JAPAN, Band 5, Nr. 191 (P-92)[863], 5. Dezember 1981; & JP-A-56 117 107 (SUMITOMO) 14-09-1981
- PATENT ABSTRACTS OF JAPAN, Band 10, Nr. 264 (P-495)[2320], 9. September 1986; & JP-A-61 88 106 (TAKANORI) 06-05-1986
- PATENT ABSTRACTS OF JAPAN, Band 10, Nr. 132 (P-456)[2189], 16. Mai 1986; & JP-A-60 253 907 (DAIDO TOKUSHUKO) 14-12-1985

## Beschreibung

Die Erfindung bezieht sich auf ein Verfahren und eine Einrichtung zum insbesondere optischen Messen der Konturen eines Körpers, insbesondere eines rotatorisch arbeitenden, spangebenden Werkzeuges, mit wenigstens einer Abtasteinrichtung.

Es sind verschiedene Vermessungsverfahren und -systeme bekannt, bei denen die Daten des Körpers durch mechanisches und/oder optisches Abtasten der Kontur ermittelt werden.

Gemeinsamer Nachteil dieser bekannten Systeme ist es, daß das Abtasten komplexer Strukturen an Werkzeugen relativ zeitraubend ist und eine Zuordnung von Abweichungen auf den Einsatz des Werkzeuges keine Berücksichtigung findet.

Verschiedene Möglichkeiten sind beispielsweise in "industrie-elektrik + elektronik, 34. Jg. 1989 Nr. 4, S. 36, 38, 40" beschrieben.

Aus dem Dokument PATENT ABSTRACTS OF JAPAN, Band 5, Nr. 191 (P-92) [863] bzw. JP-A-56-117 107 ist es bekannt, zur berührungslosen Messung der Konturen bzw. des Profils von Körpern drei Lichtstrahlen einzusetzen. Die Lichtstrahlen werden tangential zur Körperkontur gelegt, wobei eine Tangente durch einen Körperpunkt C gegenüber dem Schnittpunkt D der beiden anderen Tangenten durch die Körperpunkte A, B verläuft. Anhand des Abstandes H zwischen dem Körperpunkt C und dem Tangentenschnittpunkt D, der größer als der betreffende Körperdurchmesser ist, und des betreffenden Rotationswinkels ϑ wird die Kontur des Körpers gemessen. Eine Messung von Körpern mit kompliziertem Umfangsprofil ist dabei nicht möglich.

Der Erfindung liegt die Aufgabe zugrunde, die Konturen von Körpern auch mit komplizierter und insbesondere nicht gleichmäßiger Kontur berührungslos und einfach zu erfassen, wobei die Erfassung zugleich schnell und zuverlässig erfolgt.

Diese Aufgabe ist erfindungsgemäß bei einem Verfahren und einer Vorrichtung mit den Merkmalen des Anspruchs 1 bzw. 15 gelöst. Vorteilhafte Weiterbildungen des Verfahrens und der Einrichtung gemäß der Erfindung sind Gegenstand der abhängigen Ansprüche.

Bei dem erfindungsgemäßen Verfahren zum insbesondere optischen Messen der Konturen eines Körpers, insbesondere eines rotatorisch arbeitenden, spangebenden Werkzeugs, mit wenigstens einer Abtasteinrichtung wird ein zu vermessender Körper in einer rotierenden Aufnahme gedreht, deren Drehachse in der Längsachse des Körpers liegt. Der Körper wird mit der mindestens einen Abtasteinrichtung erfaßt, die senkrecht zur Drehachse der Aufnahme ausgerichtet ist, und mittels der Abtasteinrichtung wird die maximale radiale Abmessung des Körpers in dem betreffenden Meßebenenbereich festgestellt. Des weiteren wird der zugehörige Drehwinkel der Aufnahme festgestellt und der Wert der maximalen Abmessung zur Konturbestimmung verwendet.

Durch die Erfindung ist es ermöglicht, auch bereits mit zwei Beobachtungsstrahlen die Körperkontur zu erfassen. Hierzu ist es erforderlich, durch Abtastung die radiale Abmessung des Körpers abhängig vom Drehwinkel zu erfassen. Die festgestellten Maximalwerte können zur Konturbestimmung herangezogen werden. Auf diese Weise kann die Hüllkurve des Körpers erfaßt werden und in bezug auf diese das Körperprofil abgetastet werden.

Das erfindungsgemäße Verfahren ist einfach, denn es werden lediglich zwei Beobachtungsstrahlen benötigt. Selbstverständlich eignet es sich für die Konturmessung auch symmetrischer Körper. Besonders vorteilhaft ist jedoch der Einsatz des erfindungsgemäßen Verfahrens bei nicht rotationssymmetrischen Körpern auch mit komplizierter Kontur, denn es ist lediglich erforderlich, im betreffenden Meßebenenbereich den maximalen Radius des Körpers und den zugehörigen Drehwinkel festzustellen.

Erfindungsgemäß kann auch eine weitere Abtasteinrichtung entsprechend der Drehachse, senkrecht zu der mindestens einen Abtasteinrichtung vorgesehen sein. Auf diese Weise kann mit einer einzigen Meßeinrichtung die Mantel- und die Stirnfläche z.B. eines Bohrers schnell und genau vermessen werden.

Durch die anfängliche Hüllkurvenerfassung ist es auch möglich, den Körper zu justieren und dann die eigentliche Konturmessung durchzuführen.

Erfindungsgemäß kann nun in der in der radialen Verstellachse des Körpers angeordneten Kamera das Größtmaß gemessen und an eine Auswerteinrichtung weitergeleitet werden, welche die Justierung der Achsenlage bewirkt.

Sehr vorteilhaft ist es auch, wenn erfindungsgemäß zur Messung der Außenkonturen des Körpers Flächen- und/oder Zeilenkameras vorgesehen sind.

Dabei tasten die Zeilenkameras jeweils nur eine einzige Meßzeile ab, während die Flächenkameras gleichzeitig einen größeren Flächenabschnitt erfassen,wodurch ein sehr rationelles Meßverfahren erzielt wird.

In beiden Fällen ist der Effekt die Abtastung einer punktförmigen Größe auf der Umrißkontur des zu messenden Gegenstandes.

Erfindungsgemäß ist es auch möglich, daß zur Abtastung der Konturen des Körpers eine Lasermeßeinrichtung vorgesehen ist.

Das Meßverfahren kann erfindungsgemäß noch weiter verbessert werden, wenn die zu messenden Werte auf einen vorher bestimmten Bereich begrenzt werden.

Eine sehr vorteilhafte Ausgestaltung des erfindungsgemäßen Verfahrens liegt auch darin, daß mit Hilfe eines Eichkörpers eine gerätespezifische Kennlinie eingelesen werden kann, durch welche sich im Laufe der Zeit einstellende Abweichungen der Meßeinrichtung kompensiert werden.

Es hat sich auch als besonders vorteilhaft erwiesen, wenn erfindungsgemäß die Sollkontur und die zugelassenen Toleranzbereiche als Kurvendiagramme gespeichert sind, in welche die Ist-Werte als Meßpunkte oder als Meßlinie eingetragen werden.

Erfindungsgemäß kann auch vorgesehen sein, daß beim Messen der Konturen die Abtasteinrichtungen ortsfest bleiben und bei Abweichungen des gemessenen Ist-Wertes vom eingegebenen Sollwert der Körper nachgeführt und die entsprechende Nachführstrecke gemessen und als Abweichung aufgezeichnet wird.

Bei einem Verfahren, bei dem der Körper in der rotierenden Aufnahme, deren Drehachse in der Längsachse des Körpers liegt, gedreht wird, bis in einer rechtwinklig zur radialen Verstellachse des Körpers angeordneten Abtasteinrichtung(Kamera bzw. Lasermeßeinrichtung) das größte Radiusmaß angezeigt wird, ist es vorteilhaft, wenn dieses Istmaß in eine Tabelle eingestellt wird, dort mit einem vorgegebenen Sollwert verglichen wird und sowohl die sich daraus ergebende Differenz als auch ein Fehlermaß ausgegeben werden.

Ebenfalls sehr vorteilhaft ist es, wenn erfindungsgemäß die Tabelle auf einem Bildschirm eines Rechners angezeight wird un gleichzeitig ausgedruckt werden kann.

Erfindungsgemäß kann dann gleichzeitig mit der Tabelle ein schematisiertes Abbild des zu messenden Körpers dargestellt werden, in das eine Markierung eingeblendet wird, welche die gerade gemessene Stelle des Körpers markiert, während gleichzeitig die entsprechende Zeile der Tabelle hervorgehoben wird.

Dabei ist es sehr vorteilhaft, wenn erfindungsgemäß jeder Meßstelle bzw. Tabellenzeile eine Höhenposition der Kamera bzw. Lasermeßeinrichtung zugeordnet ist, die entsprechend der gewählten Meßstelle angefahren wird.

Von Vorteil ist es dabei, wenn je eine Tabelle für die Durchmessermessung und die Längenmessung vorgesehen ist.

Eine weitere erfindungsgemäße Ausgestaltung liegt darin, daß nach Abschluß aller Messungen an einem Körper ein Meßprotokoll automatisch erstellt wird, in dem alle wesentlichen Meßdaten erfaßt sind und das eine Aussage über die Freigabe des Körpers oder eine notwendige Nacharbeit enthält.

Die erfindungsgemäße Einrichtung zum insbesondere optischen Messen der Konturen eines Körpers, insbesondere eines rotatorisch arbeitenden, spangebenden Werkzeugs umfaßt eine rotierende Aufnahme für den Körper, deren Drehachse in der Längsachse des Körpers liegt, wenigstens zwei Abtasteinrichtungen, die den Körper in einer Richtung senkrecht zur Drehachse der Aufnahme abtasten, wobei die Abtasteinrichtungen die radialen Abmessungen des Körpers erfassen, und eine Einrichtung, die den Drehwinkel der Aufnahme erfaßt. Bei Feststellung der maximalen radialen Abmessung des Körpers wird der zugehörige Drehwinkel der Aufnahme festgestellt. Ferner ist an die Abtasteinrichtungen ein Verarbeitungssystem angeschlossen, das vorprogrammierte Sollwerte bzw. Sollkonturen mit den gemessenen Istwerten bzw. Istkonturen vergleicht und beide Werte bzw. Konturen als graphische Aufzeichnung und/oder tabellarische Wertetabelle wiedergibt.

Sehr vorteilhaft ist es dabei, wenn erfindungsgemäß zur Messung an einem vertikal angeordneten Körper drei jeweils in einer horizontalen Ebene arbeitende, jeweils um einen Winkel von etwa 90 Grad zueinander versetzte und in der Höhe verstellbare elektronische Flächen- und/oder Zeilen-Kameras bzw. Lasermeßeinrichtungen angeordnet sind, die jeweils die ihr zugeordnete Teilegeometrie erfassen.

Sehr vorteilhaft ist es auch, wenn erfindungsgemäß der zu messende Körper drehbar auf einem seitlich und/oder in der Höhe verstellbaren Schlitten od.dgl. gelagert ist.

Dadurch ist es möglich, den Körper und die Kameras genau auf einander auszurichten und die gesamte Kontur des Körpers zu erfassen.

Erfindungsgemäß kann auch vorgesehen sein, daß oberhalb des zu messenden Körpers eine weitere Kamera oder eine Lasermeßeinrichtung angeordnet ist, die entsprechend der vertikalen Achse des Körpers ausgerichtet ist.

Dadurch ist eine einfache Überprüfung des Rundlaufs des Körpers ermöglicht.

Eine vorteilhafte Ausgestaltung der Erfindung liegt auch darin, daß eine Dreibeinkonstruktion vorgesehen ist, in deren um jeweils 90 Grad versetzt angeordneten Schenkeln jeweils eine Kamera gelagert ist, während der Verbindungssteg horizontal verläuft und die nach unten gerichtete Kamera od. Lasermeßeinrichtung trägt.

Durch eine derartige konstruktive Ausgestaltung ist eine stabile Lagerung der Kameras bzw. Lasermeßeinrichtungen gewährleistet.

Erfindungsgemäß ist auch vorgesehen, daß der den zu messenden Körper tragende Schlitten und/oder dessen Drehlager sowie die Kameras bzw. Lasermeßeinrichtungen mit Verstellmotoren ausgerüstet sind.

Dadurch ist ein genaues Einjustieren und ein kontinuierliches Abtasten des Körpers auf einfache Weise ermöglicht.

Eine optimale Ausgestaltung der erfindungsgemäßen Einrichtung ergibt sich dadurch, daß eine Steuerung für die Verstellmotoren, ein Rechner für die Daten des zu messenden Körpers und für die Bildverarbeitung sowie ein Bildverarbeitungsgerät vorgesehen sind.

Sehr vorteilhaft ist es auch, wenn erfindungsgemäß eine Eingabetastatur mit Kontrollmonitor, ein Bildschirm für die Anzeige des zu messenden Körpers und ein Drucker vorgesehen sind.

Eine weitere vorteilhafte Ausgestaltung ergibt sich, wenn erfindungsgemäß die Kameras bzw. Lasermeßeinrichtungen fixierbar montiert sind und der Körper in seiner Längs-und/oder Querachse gegen die Achsen der Kameras bzw. Lasermeßeinrichtungen verstellbar gelagert ist.

Ebenfalls als sehr günstig hat es sich erwiesen, wenn im Bereich des zu messenden Körpers Beleuchtungseinrichtungen vorgesehen sind, die in Abhängigkeit von den herrschenden Kontrastverhältnissen manuell undioder über eine Steuerung zuschaltbar sind.

Vorteilhaft ist es dabei, wenn die Beleuchtungseinrichtungen unmittelbar an den Kameras angeordnet und gegen den zu messenden Körper gerichtet sind.

Dabei ist es besonders günstig, wenn die Beleuchtungseinrichtung erfindungsgemäß einfarbiges Licht, wie zum Beispiel Laserstrahlen aussendet.

Ebenfalls sehr vorteilhaft ist es, wenn die Kameraobjektive mit Bandfiltern zur Ausgrenzung von Fremdlicht versehen sind.

Erfindungsgemäß ist es auch vorteilhaft, wenn zwei Zeilenkameras um 90 Grad verdreht zu einander vorgesehen sind.

Besonders günstig ist es auch, wenn gemäß der Erfindung eine drehbar angeordnete Zeilenkamera vorgesehen ist, deren Sensorzeile um wenigstens 45 Grad schwenkbar ist.

In der Zeichnung ist ein Ausführungsbeispiel der Erfindung dargestellt. Dabei zeigen:
Fig.1 ein Schaubild einer Meßeinrichtung mit vier Kameras und einem als Schlitten ausgebildeten Werkstückhalter,
Fig.2 eine Schemazeichnung der Meßeinrichtung zur Verdeutlichung der Justiermöglichkeit des Werkzeuges,
Fig.3 ein Schaubild eines Kontrolltisches mit verschiedenen Geräten,
Fig.4 ein Auswerteblatt der Kameravermessung eines Werkzeugprofils,
Fig. 5 einen Rechner-Ausdruck mit einem schematisierten Körper sowie einer Tabelle der Durchmesser-Meßdaten
Fig.6 einen weiteren Rechner-Ausdruck für eine Längenmessung,
Fig.7 ein Meßprotokoll,
Fig.8 die Darstellung einer Flächensensor-Kamera und
Fig.9 und 10 Darstellungen zweier um jeweils 90 Grad zueinander verdrehter Zeilensensor-Kameras.

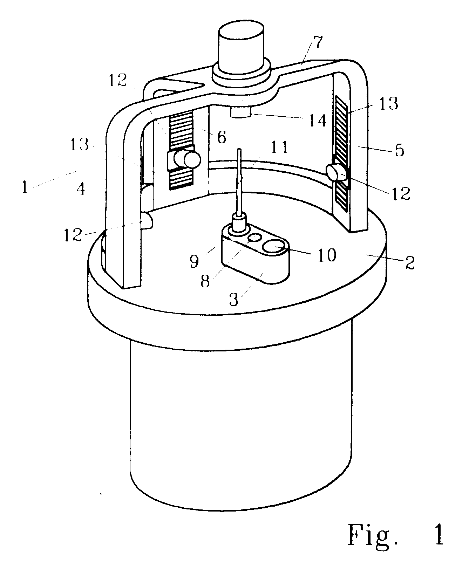

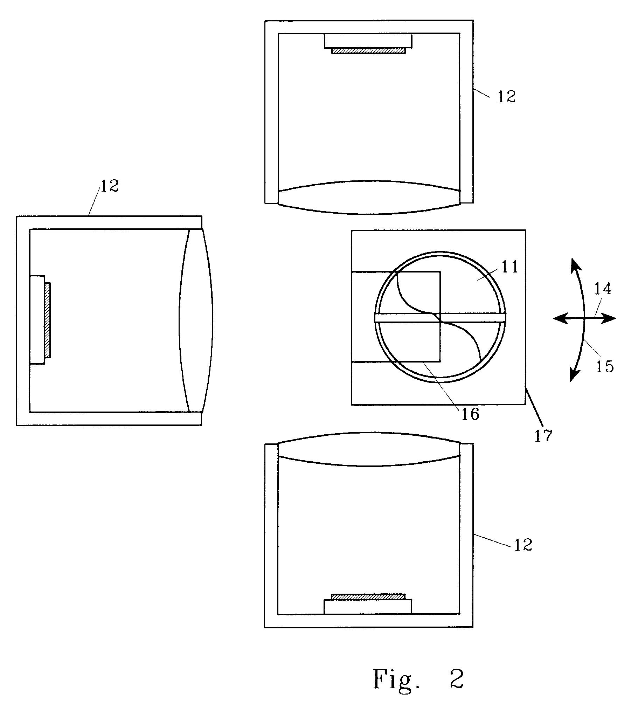

Mit 1 ist in Fig.1 eine Meßstation bezeichnet, die zum Messen der Konturen von Körpern, z.B spangebenden Werkzeugen vorgesehen ist. Die Station 1 ist mit einem Tisch 2 versehen, auf dem ein Schlitten 3 gelagert ist. Oberhalb dieses Tisches ist eine Dreibeinkonstruktion angeordnet, deren drei Schenkel 4,5,6 um jeweils 90 Grad zueinander versetzt angeordnet und an ihrem oberen, vom Tisch abgewandten Ende über einen T-förmigen Verbindungssteg 7 miteinander verbunden sind. Der Schlitten 3 ist um eine Achse 8 drehbar und weist zwei Aufnahmen 9 bzw. 10 für zu messende Körper 11 auf. Gleichzeitig ist der Schlitten 3 in einer in Fig.2 dargestellten Weise längsverschiebbar und schwenkbar und darüber hinaus höhenverstellbar. An den einander zugekehrten Innenseiten der drei Schenkel 4,5,6 sind Kameras 12 angeordnet, die auf Fahrbahnen 13 in vertikaler Richtung verfahrbar sind. Dort sind nicht dargestellte Verstellmotoren vorgesehen, die dieses Verfahren bewerkstelligen. Im Verbindungssteg 7 ist eine weitere Kamera 14 befestigt, die vertikal nach unten auf den Körper II ausgerichtet ist. Der Tisch 2 und die Dreibeinkonstruktion sind sehr stabil ausgebildet, damit das Meßergebnis der Kameras nicht durch äußere Erschütterungen beeinflusst werden kann. Anstelle von Kameras ist es auch möglich, Lasermeßeinrichtungen vorzusehen, welche ebenfalls die Konturen des Körpers 11 abzutasten vermögen. Die Fig.2 zeigt schematisch die Verstellmöglichkeiten des Körpers 11 in Richtung der beiden Pfeile 14 und 15 in Abhängigkeit der von der gegenüberliegenden Kamera 12 gemessenen Größtmaße für das Radialmaß des Werkzeugs. Die links dargestellte Kamera 12 dient dann zum Abtasten von rechtsschneidenden Werkzeugen, während die rechte Kamera für linksschneidende Werkzeuge eingesetzt wird. Die beiden mit 16 und 17 bezeichneten Linien deuten den Arbeitsbereich der vertikalen Kamera 14 an, die oberhalb des Werkzeuges angeordnet ist.

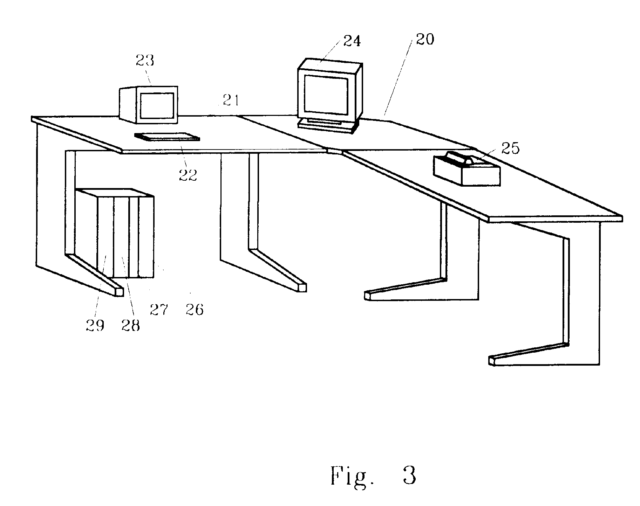

In Fig.3 ist ein Ausführungsbeispiel eines Kontrollplatzes 20 dargestellt, der aus einem ganz normalen Arbeitstisch 21 besteht, der mit einer Eingabetastatur 22, einem zugehörigen Kontrollmonitor 23, einem Bildschirm 24 für die Wiedergabe der Meßwerte sowie einem Drucker 25 ausgerüstet ist. Unter dem Tisch 21 ist noch ein Netzteil 26 zur Stromversorgung, ein Bildverarbeitungsgerät 27, ein Rechner 28 sowie ein Steuergerät 29 für die Ansteuerung der verschiedenen Verstellmotoren angeordnet, wobei die räumliche Anordnung keine Rolle spielt. Zusätzlich kann noch eine Stromversorgung vorgesehen sein, die nicht dargestellte Beleuchtungseinrichtungen, wie z.B.Laserstrahler mit Energie versorgt.

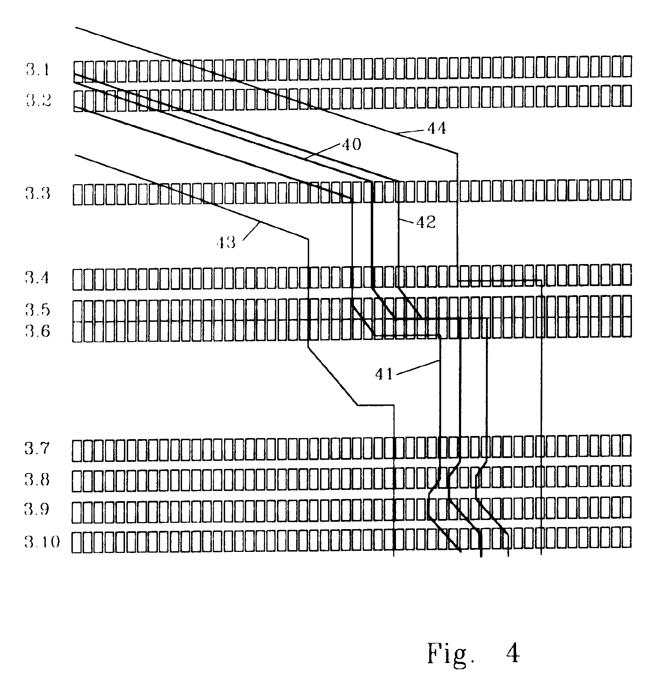

In Fig.4 ist ein Auswerteblatt dargestellt, wie es sowohl auf dem Bildschirm 24 erzeugt oder auf dem Drucker 25 ausgedruckt werden kann. Es enthält für eine einzelne Körperkontur die verschiedenen Meßzeilen, die benötigt werden, um eine optimale Vermessung der Kontur zu erzielen. Im dargestellten Beispiel sind zehn Meßzeilen 3.1 bis 3.10 vorgesehen und auch ausreichend, um dies zu erreichen. Die stark ausgezogen dargestellte Linie 40 stellt dabei die ermittelten Istwerte dar, während die gestrichelten Linien 41 und 42 die zugelassenen Toleranzgrenzen und die strichpunktierten Linien 43 und 44 den Meßbereich zeigen.

Sowohl die Anzahl der Meßzeilen als auch ihre Lage und die Sollgrenzen sowie der vorgesehene Meßbereich werden vor der Messung über die Tastatur als Einzelwerte oder als gespeichertes Programm eingegeben.

Es ist selbstverständlich auch möglich, mehr Meßzeilen anzuordnen oder auch eine stufenlose Abtastung der Körper-Konturen vorzusehen.

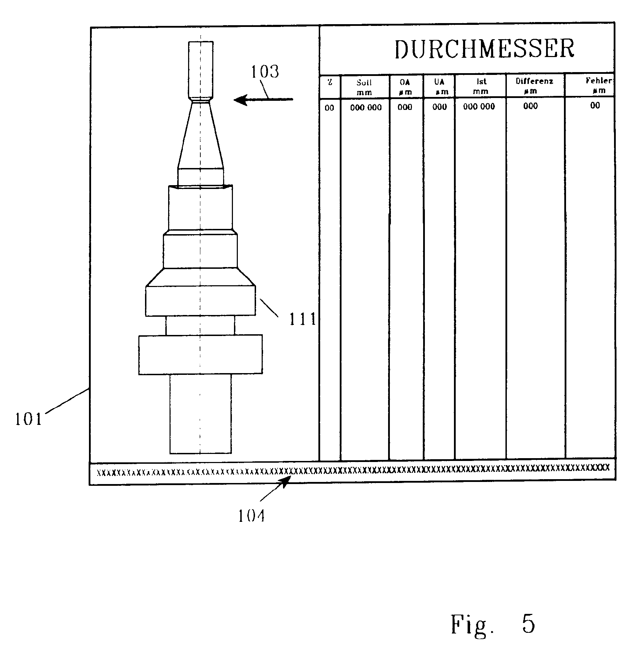

In Fig. 5 ist ein Rechner-Ausdruck 101 einer Durchmessermessung dargestellt, die im linken Abschnitt eine schematisierte Darstellung eines zu messenden Körpers 111 enthält. Dabei wird durch einen Markierungspfeil 103 (es kann sich auch um eine farblich abgesetzte Linie handeln) angezeigt, an welcher Stelle des Körpers gerade gemessen wird. Die zugehörige Zeile der rechts angeordneten Tabelle erscheint dabei ebenfalls hervorgehoben, so daß auf einen Blick die jeweilige Meßstelle und das Meßergebnis erfaßt werden können.

In der unteren durchgehend dargestellten Zeile 104 sind zweckmäßigerweise Anweisungen für die Verfahrensführung eingeblendet, die eine wesentliche Erleichterung für die Bedienung darstellen.

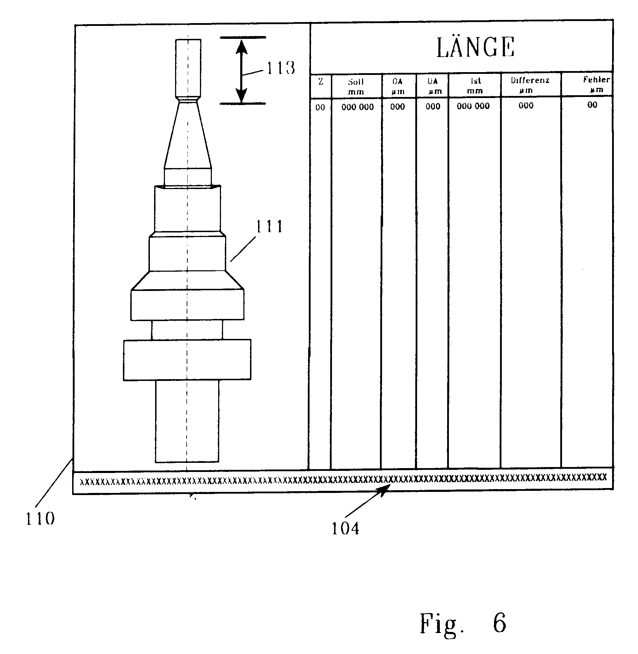

Die Darstellung des Rechner-Ausdrucks 110 in Fig. 6 unterscheidet sich dadurch, daß durch die Markierungslinien 113 der gerade gemessene Längenabschnitt des Körpers 111 angezeigt wird.

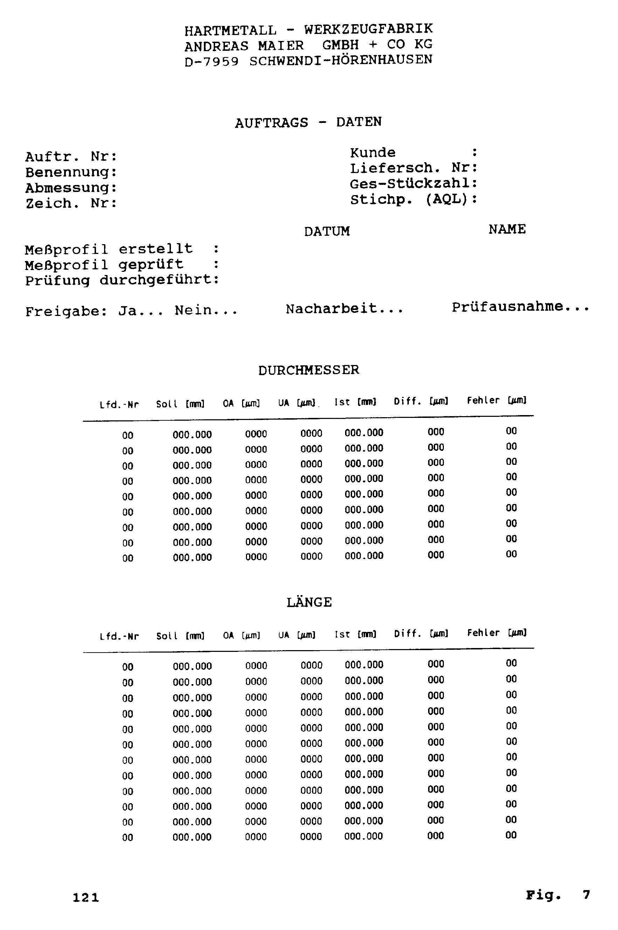

Das in Fig.7 dargestellte Meßprotokoll 121 dient im oberen Abschnitt der Erfassung der Auftragsdaten und des Gesamtergebnisses und enthält im unteren Abschnitt die Einzelwerte der Messung. Es kann sowohl als Datei wie auch als Hardcopy archiviert werden und dient als Nachweis bei späteren Nachmessungen die beispielsweise infolge von Nachschleifungen notwendig werden.

Zum Abtasten der Körper-Konturen können sowohl Lasermeßeinrichtungen verwendet werden, die mit einem Sender und einem Empfänger ausgerüstet sind. Dabei ist es möglich, eventuelle Ab weichungen von dieser Einrichtung ermitteln zu lassen oder diese fest einzustellen und den Körper bei Maßabweichungen nachzufahren und die dabei zurückgelegte Verfahrstrecke zu ermitteln.

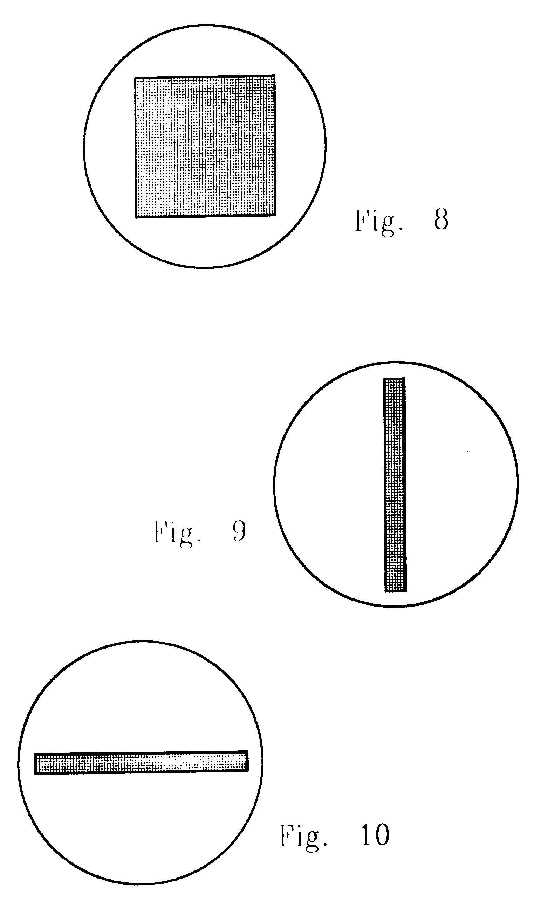

Eine weitere Möglichkeit besteht im Einsatz einer Flächensensor-Kamera, wie sie in Fig.8 angedeutet wurde und die in erster Linie zur Groberfassung der Körper-Konturen dient.

Darüber hinaus ist der Einsatz von Zeilensensor-Kameras vorgesehen, die beispielsweise um 90 Grad verdreht zu einander angeordnet sein können, wie dies aus den Fig. 9 und 10 hervorgeht. Es ist aber auch möglich, eine oder mehrere Zeilensensor-Kameras vorzusehen, die drehbar angeordnet sind und deren Sensorzeile von der Horizontalen oder der Vertikalen ausgehend um wenigstens 45 Grad schwenkbar ist. Gerade mit solchen schwenkbaren ZeilenKameras wurden hervorragende Meßergebnisse erzielt.

## Patentansprüche

1. Verfahren zum insbesondere optischen Messen der Konturen eines Körpers, insbesondere eines rotatorisch arbeitenden, spangebenden Werkzeugs, mit wenigstens einer Abtasteinrichtung, bei dem
- ein zu vermessender Körper in einer Aufnahme mit der mindestens einen Abtasteinrichtung erfaßt wird,
- die relative Drehposition des Körpers und der Abtasteinrichtung festgestellt wird und
- anhand der gemessenen Abmessungswerte die Kontur des Körpers bestimmt wird,
dadurch **gekennzeichnet,** daß
- der Körper in der Aufnahme gedreht wird, wobei die Drehachse der Aufnahme in der Längsachse des Körpers liegt und die Abtasteinrichtung senkrecht zu der Drehachse der Aufnahme ausgerichtet ist,
- mittels der Abtasteinrichtung die maximale radiale Abmessung des Körpers in dem betreffenden Meßebenenbereich festgestellt wird,
- der zugehörige Drehwinkel der Aufnahme festgestellt wird und
- der Wert der maximalen Abmessung zur Konturbestimmung verwendet wird.

2. Verfahren nach Anspruch 1, dadurch **gekenn****zeichnet**, daß der Wert der maximalen Abmessung zur Justierung des Körpers in der Aufnahme verwendet wird.

3. Verfahren nach Anspruch 1 oder 2, dadurch **ge****kennzeichnet,** daß die Abtastung des Körpers mittels mindestens einer Kamera, insbesondere Flächen- und/oder Zeilenkamera, durchgeführt wird.

4. Verfahren nach einem der Ansprüche 1 bis 3, dadurch **gekennzeichnet,** daß die Abtastung des Körpers mittels mindestens einer Lasereinrichtung durchgeführt wird.

5. Verfahren nach einem der Ansprüche 1 bis 4, dadurch **gekennzeichnet,** daß die zu messenden Werte auf einen vorher bestimmten Bereich begrenzt werden.

6. Verfahren nach einem der vorhergehenden Ansprüche, dadurch **gekennzeichnet,** daß mit Hilfe eines Eichkörpers eine gerätespezifische Kennlinie eingelesen werden kann, durch welche sich im Laufe der Zeit einstellende Abweichungen der Meßeinrichtung kompensiert werden.

7. Verfahren nach einem der vorhergehenden Ansprüche, dadurch **gekennzeichnet,** daß die Sollkontur und die zugelassenen Toleranzbereiche als Kurvendiagramme gespeichert sind, in welche die Ist-Werte als Meßpunkte oder als Meßlinie eingetragen werden.

8. Verfahren nach einem der vorhergehenden Ansprüche, dadurch **gekennzeichnet,** daß beim Messen der Konturen die Abtasteinrichtungen ortsfest bleiben und bei Abweichungen des gemessenen Ist-Wertes vom eingegebenen Sollwert der Körper nachgeführt und die entsprechende Nachführstrecke gemessen und als Abweichung aufgezeichnet wird.

9. Verfahren nach einem der vorhergehenden Ansprüche, dadurch **gekennzeichnet**, daß nach Feststellung der maximalen radialen Abmessung des Körpers dieses Ist-Maß in eine Tabelle eingestellt wird, dort mit einem vorgegebenen Sollwert verglichen wird und sowohl die sich daraus ergebende Differenz als auch ein Fehlermaß ausgegeben werden.

10. Verfahren nach Anspruch 9, dadurch **gekenn****zeichnet,** daß die Tabelle auf einem Bildschirm eines Rechners angezeigt wird und gleichzeitig ausgedruckt werden kann.

11. Verfahren nach Anspruch 10, dadurch **gekennzeichnet,** daß gleichzeitig mit der Tabelle ein schematisiertes Abbild des zu messenden Körpers dargestellt wird, in das eine Markierung eingeblendet wird, welche die gerade gemessene Stelle des Körpers markiert, während gleichzeitig die entsprechende Zeile der Tabelle hervorgehoben wird.

12. Verfahren nach einem der vorhergehenden Ansprüche 9 bis 11, dadurch **gekennzeichnet,** daß jeder Abtast bzw. Tabellenzeile eine Höhenposition der Abtasteinrichtung zugeordnet ist, die entsprechend der gewählten Meßstelle angefahren wird.

13. Verfahren nach einem der vorhergehenden Ansprüche 9 bis 12, dadurch **gekennzeichnet,** daß je eine Tabelle für die Durchmessermessung und die Längenmessung der verschiedenen Körperabschnitte vorgesehen ist.

14. Verfahren nach einem der Ansprüche 9 bis 13, dadurch **gekennzeichnet,** daß nach Abschluß aller Messungen an einem Körper ein Meßprotokoll automatisch erstellt wird, in dem alle wesentlichen Meßdaten erfaßt sind und das eine Aussage über die Freigabe des Körpers oder eine notwendige Nacharbeit enthält.

15. Einrichtung zum insbesondere optischen Messen der Konturen eines Körpers (11), insbesondere eines rotatorisch arbeitenden, spangebenden Werkzeugs, wobei die Einrichtung insbesondere zur Durchführung des Verfahrens nach einem der Ansprüche 1 bis 14 vorgesehen ist, mit
- einer Aufnahme (9, 10) für den Körper (11),
- mit wenigstens zwei Abtasteinrichtungen (12), die den Körper (11) abtasten, und
- einer Einrichtung, die die relative Drehposition des Körpers und der Abtasteinrichtung erfaßt,
dadurch **gekennzeichnet,** daß
- die Aufnahme (9, 10) drehbar ist und ihre Drehachse in der Längsachse des Körpers (11) liegt,
- die Abtasteinrichtungen den Körper (11) in einer Richtung senkrecht zur Drehachse der Aufnahme abtasten und die radialen Abmessungen des Körpers erfassen und
- die die relative Drehposition erfassende Einrichtung den Drehwinkel der Aufnahme erfaßt,
- wobei bei Feststellung der maximalen radialen Abmessung des Körpers (11) der zugehörige Drehwinkel der Aufnahme festgestellt wird,
- wobei an die Abtasteinrichtungen ein Verarbeitungssystem (27) angeschlossen ist, das vorprogrammierte Sollwerte bzw. Sollkonturen mit den gemessenen Istwerten bzw. Istkonturen vergleicht und beide Werte bzw. Konturen als graphische Aufzeichnung und/oder tabellarische Wertetabelle wiedergibt.

16. Einrichtung nach Anspruch 15, dadurch **gekennzeichnet,** daß als Abtasteinrichtung (12) mindestens eine Kamera und/oder Lasereinrichtung vorgesehen ist.

17. Einrichtung nach Anspruch 15 oder 16, dadurch **gekennzeichnet,** daß zur Messung an einem vertikal angeordneten Körper (Werkzeug 11) drei jeweils in einer horizontalen Ebene arbeitende, jeweils um einen Winkel von etwa 90 Grad zueinander versetzte und in der Höhe verstellbare elektronische Flächen und/oder Zeilen-Kameras (12) bzw. Lasermeßeinrichtungen angeordnet sind, die jeweils die ihr zugeordnete Teilegeometrie erfassen.

18. Einrichtung nach einem der Ansprüche 15 bis 17, dadurch **gekennzeichnet**, daß der zu messende Körper drehbar auf einem seitlich und/oder in der Höhe verstellbaren Schlitten (3) oder dergleichen gelagert ist.

19. Einrichtung nach einem der Ansprüche 15 bis 18, dadurch **gekennzeichnet**, daß oberhalb des zu messenden Körpers eine weitere Kamera (14) oder eine Lasermeßeinrichtung angeordnet ist, die entsprechend der vertikalen Achse des Körpers (11) ausgerichtet ist.

20. Einrichtung nach einem der Ansprüche 15-19, dadurch **gekennzeichnet,** daß eine Dreibeinkonstruktion vorgesehen ist, in deren um jeweils 90 Grad versetzt angeordneten Schenkeln (4, 5, 6) jeweils eine Kamera (12) bzw. eine Lasermeßeinrichtung gelagert ist, während der Verbindungssteg (7) horizontal verläuft und die nach unten gerichtete Kamera (14) oder Lasermeßeinrichtung trägt.

21. Einrichtung nach einem der Ansprüche 15-20 dadurch **gekennzeichnet,** daß der den zu messenden Körper (11) tragende Schlitten (3) und/oder dessen Drehlager (Aufnahmen 9, 10) sowie die Kameras (12) bzw. Lasermeßeinrichtungen mit Verstellmotoren ausgerüstet sind.

22. Einrichtung nach einem der Ansprüche 15-21, dadurch **gekennzeichnet,** daß eine Steuerung (29) für die Verstellmotoren, ein Rechner (28) für die Daten des zu messenden Körpers (11) und für die Bildverarbeitung sowie ein Bildverarbeitungsgerät (27) vorgesehen sind.

23. Einrichtung nach einem der Ansprüche 15-22, dadurch **gekennzeichnet,** daß eine Eingabetastatur (22) mit Kontrollmonitor (23), ein Bildschirm (24) für die Anzeige des zu messenden Körpers (11) und ein Drucker (25) vorgesehen sind.

24. Einrichtung nach einem der Ansprüche 15-23, dadurch **gekennzeichnet**, daß die Kameras (12) bzw. Lasermeßeinrichtungen fixierbar montiert sind und der Körper (Werkzeug 11) in seiner Längs- und/oder Querachse gegen die Achsen der Kameras bzw. Lasermeßeinrichtungen verstellbar gelagert ist.

25. Einrichtung nach einem der Ansprüche 15-24, dadurch **gekennzeichnet,** daß im Bereich des zu messenden Körpers Beleuchtungseinrichtungen vorgesehen sind, die in Abhängigkeit von den herrschenden Kontrastverhältnissen manuell und/oder über eine Steuerung zuschaltbar sind.

26. Einrichtung nach Anspruch 25, dadurch **gekenn****zeichnet,** daß die Beleuchtungseinrichtungen unmittelbar an den Kameras angeordnet und gegen den zu messenden Körper gerichtet sind.

27. Einrichtung nach Anspruch 25 oder 26, dadurch **ge****kennzeichnet,** daß die Beleuchtungseinrichtung einfarbiges Licht, wie zum Beispiel Laserstrahlen, aussendet.

28. Einrichtung nach einem der Ansprüche 15-27, dadurch **gekennzeichnet,** daß die Kameraobjektive mit Bandfiltern zur Ausgrenzung von Fremdlicht versehen sind.

29. Einrichtung nach einem der Ansprüche 15-28, dadurch **gekennzeichnet,** daß zwei Zeilenkameras um 90 Grad verdreht zueinander vorgesehen sind.

30. Einrichtung nach einem der Ansprüche 15-29, dadurch **gekennzeichnet,** daß eine drehbar angeordnete Zeilenkamera vorgesehen ist, deren Sensorzeile um wenigstens 45 Grad schwenkbar ist.

## Claims

1. Method for the in particular optical measurement of the contours of an object, in particular of a machining tool operating in a rotary manner, with at least one scanning device, in which
- an object to be measured is gripped in a holder with the at least one scanning device,
- the relative rotary position of the object and of the scanning device is ascertained and
- the contour of the object is determined by means of the measured dimensional values,
characterised in that
- the object is rotated in the holder, the axis of rotation of the holder lying on the longitudinal axis of the object and the scanning device being aligned perpendicularly to the axis of rotation of the holder,
- by means of the scanning device the maximum radial dimension of the object in the respective working plane region is ascertained,
- the associated angle of rotation of the holder is ascertained and
- the value of the maximum dimension is used for determining the contour.

2. Method according to Claim 1, characterised in that the value of the maximum dimension is used for adjusting the object in the holder.

3. Method according to Claim 1 or 2, characterised in that the scanning of the object is carried out by means of at least one camera, in particular surface and/or line camera.

4. Method according to one of Claims 1 to 3, characterised in that the scanning of the object is carried out by means of at least one laser device.

5. Method according to one of Claims 1 to 4, characterised in that the values to be measured are restricted to a predetermined region.

6. Method according to one of the preceding Claims, characterised in that by means of a calibration member, a characteristic specific to the device can be read-in, by which deviations of the measuring device occurring in the course of time are compensated for.

7. Method according to one of the preceding Claims, characterised in that the reference contour and the approved tolerance ranges are stored as curved diagrams, in which the actual values are plotted as measuring points or as a measuring line.

8. Method according to one of the preceding Claims, characterised in that at the time of measurement of the contours, the scanning devices remain stationary and at the time of deviations of the measured actual value from the reference value fed in, the object is readjusted and the corresponding readjustment distance is measured and recorded as a deviation.

9. Method according to one of the preceding Claims, characterised in that after ascertaining the maximum radial dimension of the object, this actual dimension is introduced into a table, compared therein with a predetermined reference value and both the difference resulting therefrom as well as an error dimension are issued.

10. Method according to Claim 9, characterised in that the table is displayed on a screen of a computer and can be printed out simultaneously.

11. Method according to Claim 10, characterised in that at the same time as the table, a diagrammatic image of the object to be measured is displayed, into which marking is faded-in, which marks the point of the object just measured, whereas at the same time the corresponding line of the table is highlighted.

12. Method according to one of the preceding Claims 9 to 11, characterised in that associated with each scanning or table line is a vertical position of the scanning device, along which there is movement according to the selected measuring point.

13. Method according to one of the preceding Claims 9 to 12, characterised in that a table for the measurement of the diameter and for the measurement of the length of the various sections of the object is respectively provided.

14. Method according to one of Claims 9 to 13, characterised in that after the termination of all the measurements on an object, a measuring report is automatically produced, in which all the essential measuring data are included and which contains a statement about the release of the object or necessary finishing work.

15. Device for the in particular optical measurement of the contours of an object (11), in particular of a machining tool operating in a rotary manner, the device being provided in particular for carrying out the method according to one of Claims 1 to 14, with
- a holder (9, 10) for the object (11),
- with at least two scanning devices (12), which scan the object (11), and
- a device, which monitors the relative rotary position of the object and of the scanning device,
characterised in that
- the holder (9, 10) is able to rotate and its axis of rotation lies on the longitudinal axis of the object (11),
- the scanning devices scan the object (11) in a direction perpendicular to the axis of rotation of the holder and monitor the radial dimensions of the object and
- the device monitoring the relative rotary position monitors the angle of rotation of the holder,
- on ascertaining the maximum radial dimension of the object (11), the associated angle of rotation of the holder is ascertained,
- connected to the scanning devices is a processing system (27), which compares the pre-programmed reference values or reference contours with the measured actual values or actual contours and reproduces both values or contours as a graphic representation and/or a table of values in tabulated form.

16. Device according to Claim 15, characterised in that provided as the scanning device (12) is at least one camera and/or laser device.

17. Device according to Claim 15 or 16, characterised in that for measurement on a vertically located object (tool 11), three electronic surfaces and/or line cameras (12) or laser measuring devices are provided which work respectively in a horizontal plane, are offset with respect to each other by an angle of approximately 90° and are vertically adjustable, which in each case monitor the geometry of the parts associated therewith.

18. Device according to one of Claims 15 to 17, characterised in that the object to be measured is mounted to rotate on a carriage (3) or the like which is adjustable from side to side and/or vertically.

19. Device according to one of Claims 15 to 18, characterised in that located above the object to be measured is a further camera (14) or a laser measuring device, which is aligned in accordance with the vertical axis of the object (11).

20. Device according to one of Claims 15 to 19, characterised in that a three-legged construction is provided, in the legs (4, 5, 6) of which, arranged to be offset by respectively 90°, a camera (12) or a laser measuring device is mounted, whereas the connecting web (7) extends horizontally and supports the downwardly directed camera (14) or laser measuring device.

21. Device according to one of Claims 15 to 20, characterised in that the carriage (3) supporting the object (11) to be measured and/or its rotary bearings (holders 9, 10) as well as the cameras (12) or laser measuring devices are equipped with adjusting motors.

22. Device according to one of Claims 15 to 21, characterised in that a control arrangement (29) for the adjusting motors, a computer (28) for the data of the object (11) to be measured and for processing the image as well as an image-processing device (27) are provided.

23. Device according to one of Claims 15 to 22, characterised in that an input keyboard (22) with control monitor (23), a screen (24) for the display of the object (11) to be measured and a printer (25) are provided.

24. Device according to one of Claims 15 to 23, characterised in that the cameras (12) or laser measuring devices are mounted so that they are able to be fixed and the object (tool 11) is mounted to be adjustable along its longitudinal and/or transverse axis with respect to the axes of the cameras or laser measuring devices.

25. Device according to one of Claims 15 to 24, characterised in that provided in the region of the object to be measured are lighting devices, which depending on the prevailing contrast conditions can be switched on manually and/or by way of a control arrangement.

26. Device according to Claim 25, characterised in that the lighting devices are located directly on the cameras and are directed towards the object to be measured.

27. Device according to Claim 25 or 26, characterised in that the lighting device emits monochrome light, such as for example laser beams.

28. Device according to one of Claims 15 to 27, characterised in that the camera lenses are provided with band filters for filtering out outside light.

29. Device according to one of Claims 15 to 28, characterised in that two line cameras are provided rotated through 90° with respect to each other.

30. Device according to one of Claims 15 to 29, characterised in that a line camera which is arranged to rotate is provided, whereof the sensor line is able to tilt by at least 45°.

## Revendications

1. Procédé pour la mesure notamment optique des contours d'un corps. en particulier d'un outil tournant travaillant par enlèvement de copeaux, avec au moins un dispositif d'exploration, dans lequel
- à l'aide d'au moins un dispositif d'exploration, on explore un corps à mesurer placé dans un support,
- on détermine la position relative en rotation du corps et du dispositif d'exploration et
- à partir des valeurs dimensionnelles mesurées on détermine le contour du corps,
caractérisé par le fait
- que l'on fait tourner le corps dans le support, l'axe de rotation du support étant situé sur l'axe longitudinal du corps et le dispositif d'exploration étant orienté perpendiculairement à l'axe de rotation du support,
- à l'aide du dispositif d'exploration, on détermine la dimension radiale maximale du corps dans la région du plan de mesure concerné,
- on détermine l'angle de rotation correspondant du support et
- on utilise la valeur de la dimension maximale pour déterminer le contour.

2. Procédé selon la revendication 1, caractérisé par le fait que l'on utilise la valeur de la dimension maximale pour positionner avec précision le corps dans le support.

3. Procédé selon la revendication 1 ou la revendication 2, caractérisé par le fait que l'on procède à l'exploration du corps au moyen d'au moins une caméra, notamment au moyen d'une caméra d'exploration de surface et/ou moyen d'une caméra d'exploration de ligne.

4. Procédé selon l'une des revendications 1 à 3, caractérisé par le fait que l'on procède à l'exploration du corps au moyen d'au moins un dispositif à laser.

5. Procédé selon l'une des revendications 1 à 4, caractérisé par le fait qu'on limite les valeurs à mesurer à un domaine préalablement déterminé.

6. Procédé selon l'une des revendications précédentes, caractérisé par le fait que l'on peut enregistrer, à l'aide d'un corps étalon, une courbe caractéristique spécifique à l'appareil au moyen de laquelle on compense les écarts du dispositif de mesure qui apparaissent dans le temps.

7. Procédé selon l'une des revendications précédentes, caractérisé que l'on mémorise le contour théorique et les plages de tolérances admises sous forme de diagrammes sur lesquels on porte les valeurs réelles en tant que points de mesure ou en tant que courbes de mesure.

8. Procédé selon l'une des revendications précédentes, caractérisé par le fait que, lors de la mesure des contours, les dispositifs d'exploration restent fixes et que, en cas d'écart entre la valeur réelle mesurée et la valeur théorique introduite, on règle le-corps, on mesure la course de réglage correspondante et on l'enregistre en tant qu'écart.

9. Procédé selon l'une des revendications précédentes, caractérisé par le fait qu'après avoir déterminé la dimension maximale du corps dans la direction radiale, on inscrit celle-ci en tant que cote réelle dans une table, on la compare dans cette table à une valeur théorique prédéterminée et on édite la différence obtenue et une cote de défaut.

10. Procédé selon la revendication 9, caractérisé par le fait que l'on affiche la table sur un écran d'un calculateur et que l'on peut l'imprimer simultanément.

11. Procédé selon la revendication 10, caractérisé par le fait que l'on produit, en même temps que la table, une image schématisée de l'objet à mesurer sur laquelle on place un repère qui indique le point du corps venant d'être mesuré, tandis que, simultanément, la ligne correspondante de la table apparaît plus contrastée.

12. Procédé selon l'une des revendications 9 à 11, caractérisé par le fait qu'à chaque ligne d'exploration ou à chaque ligne de la table est associée une position en hauteur du dispositif d'exploration, laquelle position est réglée en fonction du point de mesure sélectionné.

13. Procédé selon l'une des revendications 9 à 12, caractérisé par le fait qu'il est prévu respectivement une table pour la mesure du diamètre et une table pour la mesure de la longueur des différents segments du corps.

14. Procédé selon l'une des revendications 9 à 13, caractérisé par le fait qu'un protocole de mesure est établi de manière automatique lorsque toutes les mesures sur un corps sont terminées, protocole dans lequel sont recensées toutes les données de mesure essentielles et qui contient une indication de validation du corps ou une indication sur la nécessité de reprendre l'usinage.

15. Dispositif notamment pour la mesure optique des contours d'un corps (11), en particulier d'un outil tournant travaillant par enlèvement de copeaux, le dispositif étant conçu notamment pour la mise en oeuvre du procédé selon l'une des revendications 1 à 14 et comportant
- un support (9, 10) pour le corps (11),
- au moins deux dispositifs d'exploration (12) qui explorent le corps (11) et
- un dispositif qui détermine la position relative en rotation du corps et du dispositif d'exploration,
caractérisé par le fait que
- le support (9, 10) est tournant et que son axe de rotation est situé sur l'axe longitudinal du corps (11),
- les dispositifs d'exploration explorent le corps (11) dans une direction perpendiculaire à l'axe de rotation du support et déterminent les dimensions radiales dudit corps et
- le dispositif d'exploration qui mesure la position relative en rotation détermine l'angle de rotation du support,
- lors de la détermination de la dimension maximale du corps (11) dans la direction radiale l'angle de rotation associé du support étant déterminé,
- un système de traitement (27) étant connecté aux dispositifs d'exploration, lequel système de traitement compare des valeurs théoriques ou des contours théoriques pré-programmées aux valeurs réelles ou aux contours réels mesurés et reproduit les deux valeurs ou contours sous forme de représentation graphique et/ou de table de valeurs.

16. Dispositif selon la revendication 15, caractérisé par le fait qu'il est prévu comme dispositif d'exploration (12) au moins une caméra et/ou un dispositif à laser.

17. Dispositif selon la revendication 15 ou 16, caractérisé par le fait qu'il est prévu, pour la mesure sur un corps (outil 11) disposé verticalement, trois caméras (12) électroniques d'exploration de surface et/ou de ligne ou trois dispositifs à laser qui travaillent chacune (chacun) dans un plan horizontal, sont décalé(e)s l'un(e) par rapport à l'autre d'un angle 90° environ et sont réglables en hauteur et mesurent chacun(e) la géométrie du secteur qui leur est associé.

18. Dispositif selon l'une des revendications 15 à 17, caractérisé par le fait que le corps à mesurer est monté avec possibilité de rotation sur un chariot (3) ou similaire réglable latéralement et/ou en hauteur.

19. Dispositif selon l'une des revendications 15 à 18, caractérisé par le fait qu'une caméra (14) ou un dispositif à laser supplémentaire est disposé(e) au-dessus du corps à mesurer et est orienté(e) suivant l'axe vertical du corps (11).

20. Dispositif selon l'une des revendications 15 à 19, caractérisé par le fait qu'il est prévu une construction en trépied dont les pieds (4, 5, 6) qui sont décalés respectivement de 90° portent chacun une caméra (12) ou un dispositif de mesure à laser tandis que la traverse de liaison (7) s'étend horizontalement et porte la caméra (14) ou le dispositif de mesure à laser tourné(e) vers le bas.

21. Dispositif selon l'une des revendications 15 à 20, caractérisé par le fait que le chariot (3) qui porte le corps (11) à mesurer et/ou son support tournant (support 9, 10) ainsi que les caméras (12) ou les dispositif de mesure à laser sont équipés de moteurs de réglage.

22. Dispositif selon l'une des revendications 15 à 21, caractérisé par le fait qu'il est prévu une commande (29) pour les moteurs de réglage, un calculateur (28) pour les données concernant le corps (11) à mesurer et pour le traitement d'images ainsi qu'un appareil (27) de traitement d'images.

23. Dispositif selon l'une des revendications 15 à 22, caractérisé par le fait qu'il est prévu un clavier de saisie (22) avec moniteur de contrôle (23), un écran (24) pour l'affichage du corps (11) à mesurer et une imprimante (25).

24. Dispositif selon l'une des revendications 15 à 23, caractérisé par le fait que les caméras (12) ou les dispositif de mesure à laser sont montés avec possibilité d'immobilisation et que le corps (outil 11) est monté avec possibilité de réglage suivant son axe longitudinal et/ou son axe transversal par rapport aux axes des caméras ou des dispositif de mesure à laser.

25. Dispositif selon l'une des revendications 15 à 24, caractérisé par le fait qu'il est prévu dans la région du corps à mesurer des dispositifs d'éclairage qui peuvent être mis en service manuellement et/ou par l'intermédiaire d'une commande en fonction des conditions de contraste rencontrées.

26. Dispositif selon la revendication 25, caractérisé par le fait que les dispositifs d'éclairage sont disposés directement sur les caméras et sont dirigés vers le corps à mesurer.

27. Dispositif selon la revendication 25 ou la revendication 26, caractérisé par le fait que le dispositif d'éclairage émet de la lumière monochromatique, comme par exemple un rayonnement laser.

28. Dispositif selon l'une des revendications 15 à 27, caractérisé par le fait que les objectifs des caméras sont munis de filtres passe-bandes aux fins d'éliminer la lumière parasite.

29. Dispositif selon l'une des revendications 13 à 28, caractérisé par le fait qu'il est prévu deux caméras de lignes qui sont tournées de 90° l'une par rapport à l'autre.

30. Dispositif selon l'une des revendications 15 à 29, caractérisé par le fait qu'il est prévu une caméra de lignes qui est montée tournante et dont la rangée de détecteurs peut pivoter d'au moins 45 degrés.
